(19) **Europäisches Patentamt / European Patent Office / Office européen des brevets**

(11) **EP 2 844 415 B1**

(12) **EUROPEAN PATENT SPECIFICATION**

(45) Date of publication and mention
of the grant of the patent:
**03.08.2016 Bulletin 2016/31**

(51) Int Cl.:
**B23K 20/12** *(2006.01)* **B23K 20/227** *(2006.01)*
**B23K 20/26** *(2006.01)*

(21) Application number: **13720890.6**

(22) Date of filing: **29.04.2013**

(86) International application number:
**PCT/EP2013/058844**

(87) International publication number:
**WO 2013/164294 (07.11.2013 Gazette 2013/45)**

(54) **METHOD FOR WELDING AT LEAST TWO LAYERS**

VERFAHREN ZUM VERSCHWEISSEN VON MINDESTENS ZWEI SCHICHTEN

PROCÉDÉ POUR SOUDER AU MOINS DEUX COUCHES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.04.2012 EP 12166124**

(43) Date of publication of application:
**11.03.2015 Bulletin 2015/11**

(73) Proprietor: **Université Catholique de Louvain
1348 Louvain-la-Neuve (BE)**

(72) Inventors:
• **JACQUES, Pascal
B-1457 Tourinnes-Saint-Lambert (BE)**
• **VAN DER REST, Camille
B-1450 Blanmont-Chastre (BE)**
• **SIMAR, Aude
B-1300 Wavre (BE)**

(74) Representative: **De Groote, Christophe et al
Abyoo sprl
Centre Monnet
Avenue Jean Monnet, 1
1348 Louvain-la-Neuve (BE)**

(56) References cited:
**WO-A1-2010/067796     WO-A1-2011/125376
JP-A- 2003 275 876     JP-A- 2005 161 382
US-A- 3 899 116**

## Description

### Field of the invention

The invention relates to a method for welding at least two layers together over at least a first joint surface, the materials of the layers being chosen among the following materials: metals, semi-metals or semiconductors.

### Description of prior art

In 1991, the welding institute developed a technique known as Friction Stir Welding (FSW) for joining metallic alloys that are difficult to weld by conventional fusion welding. A rotating tool with a pin is translated along a butt joint between two clamped pieces that need to be joined. The rotating pin penetrates the two pieces causing the stirred materials (typically metallic materials) to soften without melting. This process involves dynamic recrystallization of the base materials. FSW is a solid-state joining process: the two materials of the two pieces to join are not melted during the process.

Friction Stir Lap Welding (FSLW) is an application of FSW when one aims at joining at least two layers that are typically metallic layers (see for instance R.S. Mishra et al. in Mater. Sci. Eng. R 50 (2005), 1-78). As for FSW, a rotating tool with a pin is used in this technique for mechanically mixing the materials of the different layers. Hence, FSLW is also a solid-state joining technique. As reported in Metall. Mater. Trans. A Vol 42, Issue 9, pp.2850-2861 by Zhang Guifeng et al., FSLW presents several drawbacks such as inducing voids along the interfaces between the different layers that are joined. The pin of the rotating tool that must penetrate the different layers to allow a mechanical mixing between the different layers is also substantially damaged during the process. One could use a rotating tool without a pin to prevent wear of the pin but then the mechanical mixing between the different layers would be poor, resulting in very poor joint strength.

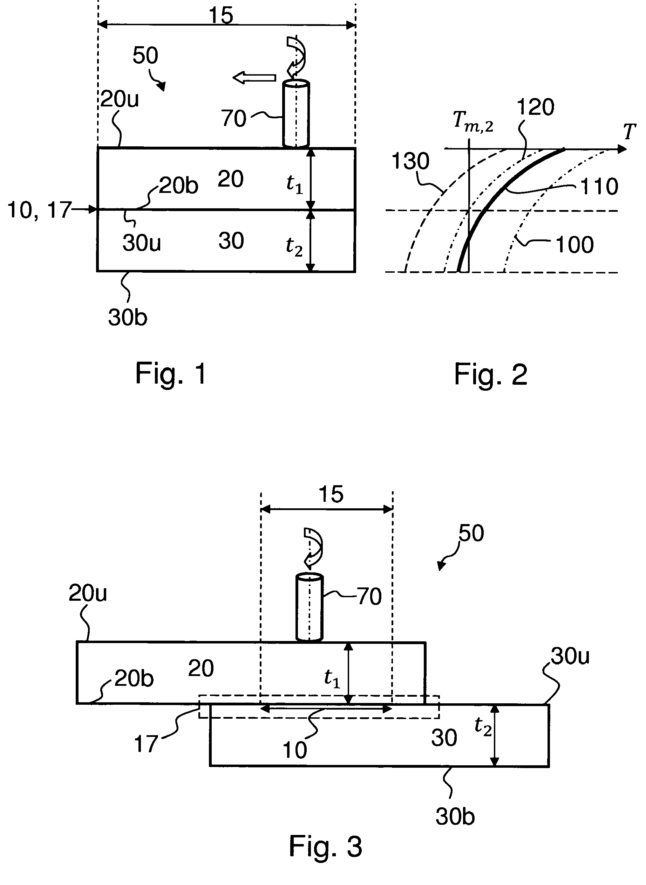

Therefore, Zhang Guifeng et al. have proposed, in Metall. Mater. Trans. A Vol 42, Issue 9, pp.2850-2861, a process named Friction Stir Brazing (FSB). In this process, a rotating tool without pin is used and translated on the upper surface of a top layer. A braze layer is placed in between two layers to join. Zn foils are typically chosen as braze layers because of the low melting point of Zn. In Zhang Guifeng et al.'s publication, a Zn foil is used for joining an aluminium (Al) layer to a steel layer. The Al layer is the top layer meaning that the rotating tool is translated over the upper surface of the Al layer. When the rotating tool (without pin) is pressed and translated over the upper surface of the top layer, heat is generated below the rotating tool by friction. This heat induces melting of the Zn foil allowing joining the two layers (of Al and steel in this particular case). The thickness of the Zn foil must be small (typically around 0.1 mm) in order to have a complete melting of the Zn foil all along its whole thickness. As shown and explained in Zhang Guifeng et al.'s publication (for instance in figure 3, and in paragraphs III.A, D), a large amount of Zn is squeezed out by the rotating tool when it is translated over the upper surface of the top layer to induce the melting of the Zn foil.

FSB requires the presence of a braze layer between the two layers to join. This braze layer is typically a Zn layer. This leads to different drawbacks. First, the cost is increased as an additional material is needed. Second, the presence of the braze layer can induce contamination to the two layers to join, especially when a heat treatment is after applied to the multilayer structure.

WO2010/067796A1 describes a method for joining a thermoplastic polymeric layer with a metal layer. These two members are overlapped, and a rotating friction stir tool is pressed from the metal member side and the two members are joined by the heat of friction: after the polymer is melted by the heat of friction, the resin fuses to the metal member along a joint surface as the temperature drops, thus forming an interfacial joint. The joining method of WO2010/067796A1 presents several drawbacks. At the interfacial joint surface between the two layers, the properties along the thickness of the two layers (such as thermal conductivity, electrical resistance) present a sharp discontinuity at the level of the interface. In many applications, such a discontinuity in the properties of the set is not desirable as it leads to poor global performances across the thickness. Furthermore, the clear interface between the two layers induces weak mechanical resistance of the joint between the two layers.

US 3,899,116 discloses a method of welding two layers of dissimilar metals by means of vibratory energy.

### Summary of the invention

It is an object of the present invention to provide a method for joining at least two layers yielding an improved continuity at the joint surface between the two layers. To this end, the inventors propose the following method.

Method for welding at least two layers together over at least a first joint surface, of the materials of the layer being chosen among the following materials: metals, semi-metals or semiconductors; the method comprising the steps of:

(a) providing a first layer of a first material having a first melting temperature, $T_{m,1}$, said first layer having an upper surface and a lower surface separated by the thickness $t_1$ of the first layer;

(b) providing a second layer of a second material having a second melting temperature, $T_{m,2}$, lower than the first melting temperature, $T_{m,1}$, said second layer having an upper surface and a lower surface separated by the thickness $t_2$ of the second layer;

(c) forming a layup by stacking the first and second layers such that the lower surface of the first layer contacts and at least partially overlaps the upper surface of the second layer forming an interface;

(d) pressing and translating over at least one friction portion of the upper surface of the first layer, wherein the portion of the interface which is in registry with the friction portion defines the first joint surface, a rotating tool to raise the temperature of said at least one friction portion of the upper surface of the first layer by friction and to conduct heat through the thickness $t_1$ of the first layer to the second layer such that the temperature reached by at least a portion of the upper surface of the second layer that is comprised in said first joint surface is higher than the second melting temperature $T_{m,2}$;

(e) providing restraining means for preventing molten second material from flowing out of the layup.

The terms metals, semi-metals and semiconductors are known by the one skilled in the art and can be defined according to electronic band theory.

A metal has an electron band structure that is characterized by a partially filled conduction band, CB, and that has a large density of states at the Fermi level. A semi-metal has an electron band structure that is characterized by a small overlap between the bottom of the conduction band, CB, and the top of the valence band, VB. A semi-metal has no band gap, $E_g$, and a negligible density of states at the Fermi level. In a semi-metal, the bottom of the conduction band, CB, is generally situated in a different part of momentum space (different k-vector) that the top of the valence band, VB. Semi-metals have charge carriers of both types: holes and electrons.

A semi-conductor has a filled valence band, VB, at 0 K that is separated from an empty conduction band, CB, by a relatively narrow band gap $E_g$: $E_g$ is smaller than 4 eV in general.

As first and second materials are chosen among metals, semi-metals, or semiconductors, an inter-phase is formed between first and second layers upon joining them with a method according to the present invention. The inter-phase results from the reaction that takes place between the first layer that remains solid and the second layer that is melted at least along a portion of the upper surface of the second layer: atoms or molecules of the first layer diffuse into the liquid phase of the second layer, forming a 'chemical' inter-phase when temperature decreases. Concurrently or alternatively, crystals may grow from one layer across the interface and penetrate into the second layer, thus forming a 'physical' inter-phase. Alternatively, atoms or molecules of both first and second layers diffuse to the other layer forming an inter-phase. Such an inter-phase can therefore have a chemical composition different from first and second layers and/or a different physical configuration from these two layers. So, contrary to the set obtained with the method of WO2010/067796A1 (that comprises only two phases), a set with three different zones is obtained at the end of the method of the invention: one zone corresponds to the phase of the first layer, one zone corresponds to the phase of the second layer, and one zone corresponds to the inter-phase. Preferably, these three different zones are three different phases. This inter-phase allows obtaining a gradient in the properties of the set instead of a sharp discontinuity as obtained with an interfacial joint. A gradient in the chemical composition can also be obtained. Finally, an improved continuity at the first joint surface between the two layers is obtained resulting in improved global performances of the set. In particular, the mechanical resistance of the first joint surface is higher thanks to the presence of the inter-phase between first and second layers.

In the method of the invention, no braze layer is used to join the first and second layers. Thanks to the heat generated by the rotating tool, the second layer melts allowing welding it to the first layer. As the method of the invention uses retraining means for preventing molten second material from flowing out of the layup, the presence of said second material is maintained at the end of the joining process (or method of the invention). If restraining means were not used, a large amount of second material of second layer would be squeezed out during the joining process as it is the case for the Zn layer in FSB. The use of restraining means also allows having a high control of the thickness of the different layers.

The method of the invention has other advantages. Contrary to FSW or FSLW, the method of the invention does not require the rotating tool to penetrate up to the second layer. The only requirement is that heat generated by friction below the rotating tool is transmitted by conduction through the thickness $t_1$ of the first layer to the second layer. Hence, less sophisticated rotating tools can be used for the method of the invention compared to FSW or FSLW. As the rotating tool can be simpler in the method of the invention, this technique is cheaper than FSW or FSLW. The method of the invention is also less destructive for the rotating tool compared to FSW or FSLW as the rotating tool does not have to penetrate the whole thickness $t_1$ of the first layer.

Preferably, the restraining means comprise a cavity with side walls into which said layup is snugly placed. In this preferred embodiment, the side walls of the cavity into which the layup (of stack) is placed prevent molten second material from flowing out of the layup (of stack).

Preferably, the restraining means prevent the rotating tool from reaching a fringe extending along at least a portion of the perimeter of the upper surface of the first layer. In this preferred embodiment, the rotating tool is not pressed and translated over a fringe running around at least a portion of the perimeter of the first upper surface. This induces that the second layer is not melted in a whole plane perpendicular to the thickness $t_2$. The non melted parts of the second layer restrain molten second material from flowing out of the layup. More preferably, the rotating tool is not pressed and translated over the whole perimeter of the first upper surface.

Preferably, the restraining means comprise a solid lower surface of the second layer. In this preferred embodiment, the second layer is not melted along its whole thickness $t_2$ as the temperature reached by the second lower surface of the second layer is lower than the second melting temperature, $T_{m,2}$. Such a situation is different from what takes place in FSB. Hence, molten second material does not flow out of the layup in this preferred embodiment as the non melted part of the second layer prevent it.

Preferably, at least one of said first and second materials of first and second layers is a metal. Then, an intermetallic layer is preferably formed between first and second layers.

Preferably, the at least two layers are metal layers. More preferably, the first material is steel and the second material is aluminium. Hence, contrary to FSB disclosed in Guifeng Zhang et al.'s publication, the first layer over which the rotation tool is pressed and translated comprises steel rather than aluminum in this preferred embodiment.

Preferably, the ratio between the first and second melting temperatures, $T_{m,1} \big/ T_{m,2}$ is higher than 1.2. Preferably, the thickness $t_1$ of the first layer and the thickness $t_2$ of the second layer are comprised between 0.3 mm and 2 mm. Preferably, the rotating tool is made of a material comprising cemented carbide. Preferably, the rotating tool has a cylindrical shape with an external diameter comprised between 10 mm and 20 mm. Preferably, the rotating tool is translated over said at least one friction portion of the upper surface of the first layer with a speed that is comprised between 50 mm/min and 1000 mm/min. More preferably, the rotating tool is translated over said at least one friction portion of the upper surface of the first layer with a speed that is comprised between 100 mm/min and 500 mm/min. Preferably, the rotating tool has a speed of rotation comprised between 1000 and 3000 revolutions per minute.

Preferably:

- the method of the invention further comprises between steps (b) and (c) the step of providing a third layer of a third material having a third melting temperature, $T_{m,3}$, higher than the second melting temperature, $T_{m,2}$, of the second layer, said third layer having an upper surface and a lower surface; wherein in step (c):
- the layup further comprises said third layer such that the upper surface of the third layer contacts and at least covers the portion of the lower surface of the second layer which is in registry with the first joint surface; and wherein in step (d):
- the rotating tool raises the temperature of the lower surface of the second layer to a value higher than the second melting temperature $T_{m,2}$ thereof.

This preferred version of the method of the invention allows welding more than two layers. In this case, at least a portion of the second layer melts over its whole thickness $t_2$. In this preferred embodiment, the restraining means preferably comprise the third layer that remains solid.

Preferably, the third material is vanadium. Preferably, the third material is steel.

## Short description of the drawings

These and further aspects of the invention will be explained in greater details by way of examples and with reference to the accompanying drawings in which:

Fig. 1    schematically shows a layup of two layers with a rotating tool that is pressed and translated over the upper surface of the first layer;

Fig. 2    schematically shows examples of profiles of temperature that are induced along the thicknesses of the two layers of figure 1 and under the rotating tool when it is pressed on the upper surface of the first layer;

Fig.3    shows an example of configuration where the first layer does not overlap the whole second layer;

Fig. 4    schematically shows how the rotating tool can be positioned with respect to the upper surface of the first layer;

Fig.5    schematically shows a cavity with side walls into which a layup comprising at least two layers is snugly placed;

Fig.6    schematically shows the upper surface of the first layer that is covered by a mask;

Fig.7    schematically shows a layup of two layers when the lower surface of the second layer is solid;

Fig.8    shows images of microstructures of two layers that are welded according to the method of the invention;

Fig.9    shows images of microstructures of two layers that are welded according to the method of the invention;

Fig.10    schematically shows a layup of three layers;

Fig.11    shows images of microstructures of three layers that are welded according to the method of the invention.

The figures are not drawn to scale. Generally, identical components are denoted by the same reference numerals in the figures.

## Detailed description of preferred embodiments

The method of the invention is a welding method for joining at least two layers of two different materials. Hence, it is neither a brazing method nor a soldering method. Generally, the one skilled in the art names as soldering methods techniques for joining at least two layers (that can comprise a same material or not) by melting and flowing a filler metal or a solder into the interface between the two layers. The filler metal or solder has a lower melting temperature than the two layers to join. Hence, soldering appears to be a hot glue process where the filler metal or solder, when it is cooled, allows obtaining a solid junction between the two layers. Brazing technique is a particular case of soldering and typically corresponds to a soldering method requiring a relatively high temperature to melt the solder allowing obtaining strong joints between the two layers to joint. An example of braze material is Zn that melts at around 420 °C in atmospheric pressure.

Figure 1 schematically shows, along a two-dimensional view, how the method of the invention is carried out. First, at least two layers to weld are provided. In the case of figure 1, it is assumed that a first 20 and a second 30 layers are to be joined or welded. The first layer 20 (respectively second layer 30) comprises a first (respectively second) material having a first (respectively second) melting temperature, $T_{m,1}$ (respectively $T_{m,2}$). The second melting temperature of the second material is lower than the first melting temperature of the first material: $T_{m,1} > T_{m,2}$. The term 'melting temperature' is known by the one skilled in the art. First and second materials of the first 20 and second 30 layer are chosen among the following materials: metals, semi-metals or semiconductors. The first layer 20 has an upper surface 20u and a lower surface 20b separated by the thickness $t_1$ of the first layer 20. The second layer 30 has an upper surface 30u and a lower surface 30b separated by the thickness $t_2$ of the second layer 30.

As shown in figure 1, a layup 50 (or stack) has to be formed by stacking the first and second layers (20,30) such that the lower surface 20b of the first layer 20 contacts and at least partially overlaps the upper surface 30u of the second layer 30. The overlap of the first layer 20 with the second layer 30 defines an interface 17. In figure 1, it is assumed that the lower surface 20b of the first layer 20 totally overlaps the upper surface 30u of the second layer 30. However, this is not required for the method of the invention. Figure 3 shows another example of the layup 50 that is formed for carrying out the method of the invention. In this example, the lower surface 20b of the first layer 20 does not totally overlap the upper surface 30u of the second layer 30. In this case, the interface 17 has an area that is smaller than the areas of the lower surface 20b of the first layer 20 and of the upper surface 30u of the second layer 30. The lower surface 20b of the first layer 20, the upper surface 30u of the second layer 30, and the interface 17 can be planar, smooth or rough. In fact, not specific shape of these surfaces is required for carrying out the method of the invention.

A rotating tool 70 is pressed and translated over at least a friction portion 15 of the upper surface 20u of the first layer 20. The layup 50 is preferably firmly clamped to a backing plate when the rotating tool 70 is pressed and translated over at least a friction portion 15 of the upper surface 20u of the first layer 20. As shown in figure 3, the portion of the interface 17 that is in registry with the friction portion 15 defines the first joint surface 10 along which the at least two layers (20,30) are welded or joined. The terms 'in registry with' means that the friction portion 15 of the upper surface 20u of the first layer 20 along which the rotating tool 70 is translated comprises the orthogonal projection of the first joint surface 10 on said upper surface 20u of the first layer 20. In figure 1, the first joint surface 10 is equivalent to the interface 17. In figure 3, the first joint surface 10 is smaller than the interface 17.

Figure 2 shows different temperature profiles that can be induced along the thickness ($t_1 + t_2$) of the layup 50 and below the rotating tool 70 when it is pressed on the upper surface 20u of the first layer 20. Because of the rotation and of the translation of the rotating tool 70, the temperature of the friction portion 15 is raised by friction. The heat that is generated is transferred to the second layer 30 through the thickness $t_1$ of the first layer 20. For the method of the invention, the temperature reached by at least a portion of the upper surface 30u of the second layer 30, because of the translation of the rotating tool 70 along the friction portion 15, has to be higher than the second melting temperature $T_{m,2}$ of the second layer 30 (or of the second material). The at least one portion of the upper surface 30u of the second layer 30 that has to reach a temperature higher than $T_{m,2}$ is comprised in the first joint surface 10. Hence, a liquid phase of the second material is formed at a portion of the upper surface 30u of the second layer 30 that is included in the first joint surface 10. In figure 2, temperature profile 130 does not correspond to a situation where a portion of the upper surface 30u of the second layer 30 reaches a temperature higher than $T_{m,2}$. However, temperature profiles 120, 110, and 100 allow obtaining a liquid phase of the second material at a portion of the upper surface 30u of the second layer 30. Indeed, at least a portion of the upper surface 30u of the second layer 30 reaches a temperature higher than $T_{m,2}$ in these cases. Hence, such temperature profiles correspond to normal conditions when the method of the invention is carried out. Temperature profile 100 corresponds to a situation where the second layer 30 is melted over its whole thickness $t_2$ : at least a portion of the lower surface 30b of the second layer 30 reaches a temperature higher than $T_{m,2}$ in this case. When the portion of the upper surface 30u of the second layer 30 that has reached a temperature higher than $T_{m,2}$ cools down below this temperature $T_{m,2}$, the two layers (20,30) are welded and an inter-phase is formed between first 20 and second 30 layers. The inter-phase results from the reaction that takes place between the first 20 layer that remains solid and the second 30 layer that is melted at least along a portion of the upper surface 30u of the second layer 30: atoms or molecules of the first layer 20 diffuse into the liquid phase of the second layer 30, forming a 'chemical' inter-phase when temperature decreases. Concurrently or alternatively, crystals may grow from one layer across the interface and penetrating into the second layer, thus forming a 'physical' inter-phase. Alternatively, atoms or molecules of both first 20 and second 30 layers diffuse to the other layer forming an inter-phase. Such an inter-phase can therefore have a chemical composition different from first 20 and second 30 layers and/or a different physical configuration from these two layers (20,30).

Restraining means allow preventing molten second material of the second layer 30 from flowing out of the layup 50. Different examples of restraining means are presented below. So, contrary to the FSB technique, the layer that is melted is one of the layers to join. In the FSB technique, the layer that is melted only serves as a solder and is squeezed out during the joining process.

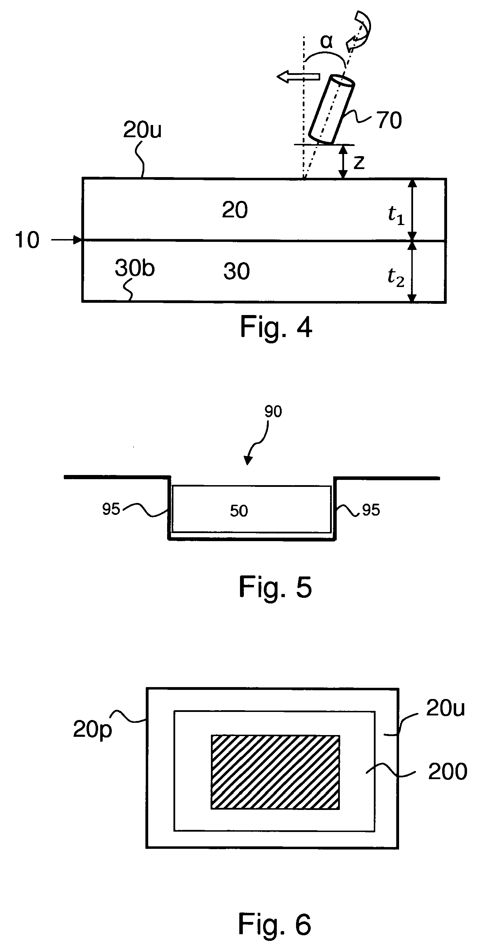

The rotating tool 70 that is pressed and translated over at least a friction portion 15 of the upper surface 20u of the first layer 20 can be tilted of a angle $\alpha$ with respect to an axis that is perpendicular to the upper surface 20u of the first layer 20. This is illustrated in figure 4. Preferably, the angle $\alpha$ is comprised between 0° and 5°, and more preferably between 0.5° and 1°. Tilting the rotating tool 70 with respect to an axis that is perpendicular to the upper surface 20u of the first layer 20 ensures a good mechanical contact between this tool 70 and the upper surface 20u of the first layer 20. Moreover, such an inclination of the rotation tool 70 allows obtaining a smoother surface behind it.

The distance of the rotating tool 70 with respect to the upper surface 20u of the first layer 20 (parameter z in figure 4) can be adjusted by force (pressure) or position control. When controlled by force, the machine holding the rotating tool 70 automatically adjusts its position to keep the pressure applied to the upper surface 20u of the first layer 20 constant. When using a position control, the position of the rotating tool 70 follows instructions but the pressure applied by the rotating tool 70 on the upper surface 20u of the first layer 20 can vary. Parameter z in figure 4 is generally named 'plunge' by the one skilled in the art. Preferably, the plunge z is negative to generate enough heat by friction. A negative plunge z means that the rotating tool 70 penetrates the first layer 20. Preferably, the plunge z is comprised between - 0.7 mm and 0 mm, and is more preferably equal to -0.55 mm. Still more preferably, z is comprised between -0.2mm and 0mm, and still more preferably between -0.08mm and -0.01 mm. The rotating tool 70 can have various shapes. Preferably, it has a cylindrical shape.

Figure 5 shows an example of restraining means for preventing molten second material from flowing out of the layup 50. In this example, said restraining means comprise a cavity 90 with side walls 95 into which the layup 50 is snugly placed. Hence, when the rotating tool 70 is pressed and translated over at least a friction portion 15 of the upper surface 20u of the first layer 20 molten second material is retained in the layup 50 because of the side walls 95.

Figure 6 shows another example of restraining means for preventing molten second material from flowing out of the layup 50. In this case, a mask 200 is placed on top of the upper surface 20u of the first layer 20 such that the rotating tool 70 cannot reach a fringe extending along the perimeter 20p of the upper surface 20u of the first layer 20. Hence, the rotating tool 70 is pressed and translated over the hatched surface of figure 6 in this case. As the rotating tool 70 does not reach the perimeter 20p of the upper surface 20u of the first layer 20, some regions of the first material remain solid close to the borders of the layup 50 preventing molten second material from flowing out of the layup 50. Alternatively, means controlled by a computer or a central processing unit (CPU) could prevent the rotating tool 70 from reaching a fringe extending along the perimeter 20p of the upper surface 20u of the first layer 20.

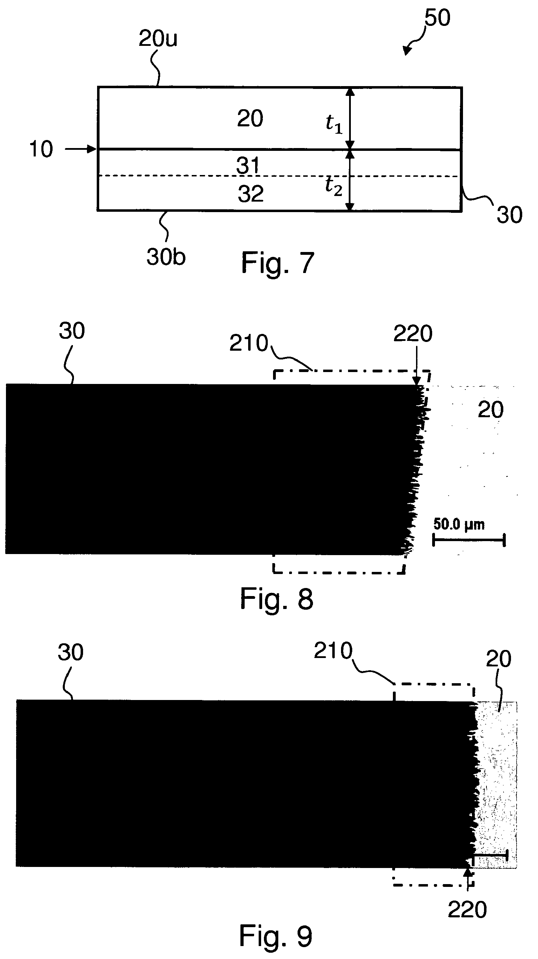

Figure 7 shows another example of restraining means for preventing molten second material from flowing out of the layup 50. In this case, the lower surface 30b of the second layer 30 remains solid. Hence, the temperature reached by the lower surface 30b of the second layer 30 is lower than $T_{m,2}$. This solid surface allows preventing molten second material from flowing out of the layup 50. In this preferred embodiment of the method of the invention, the second layer 30 comprises a liquid zone 31 and a solid zone 32 as shown in figure 7. Each of the three examples of restraining means that are shown in figures 5 to 7 can be combined to each other. So, one can place the layup 50 in a cavity 90 with side walls 95 and provide a mask 200 on the upper surface 20u of the first layer 20. Alternatively, one can use the mask 200 of figure 6 and choose the experimental parameters such that the lower surface 30b of the second layer 30 remains solid.

Preferably, the two layers (20,30) are two metal layers. This means that the first 20 and second 30 layers preferably comprise a metallic material. More preferably, the first material of the first layer 20 is steel and the second material of the second layer 30 is aluminium. In such a case, the first melting temperature, $T_{m,1}$, is typically comprised between 1300°C and 1400°C whereas the second melting temperature, $T_{m,2}$, can be about 660°C or less. Preferably, the first material of the first layer 20 has a thermal conductivity at 20°C higher than 1W/(m*K), and more preferably higher than 10W/(m*K).

Preferably, the first melting temperature, $T_{m,1}$, of the first material is higher than $T_{m,2}$ + 50°C, where $T_{m,2}$ is the second melting temperature of the second material of the second layer 30. More preferably, the ratio

$$T_{m,1}\big/T_{m,2}$$

is higher than 1.2, and more preferably, higher than 1.5.

Preferably, the thickness $t_1$ of the first layer 20 and the thickness $t_2$ of the second layer 30 are comprised between 0.1 and 5 mm, and more preferably between 0.3 and 2 mm. Still more preferably, $t_1$ and $t_2$ are comprised between 0.6 and 1.4 mm. However, other values of the thickness $t_1$ and $t_2$ could be used. In particular, any values of the thickness $t_2$ can be used.

Preferably, the rotating tool 70 is made of a material comprising cemented carbide or tungsten carbide. Preferably, the rotating tool 70 has a cylindrical shape with an external diameter comprised between 10 and 20 mm, and more preferably between 12 and 16 mm.

Preferably, the rotating tool 70 is translated over the at least one friction portion 15 of the upper surface 20u of the first layer 20 with a speed that is comprised between 50 mm/min and 1000 mm/min, and more preferably between 100 mm/min and 500 mm/min. By using a speed higher than 500 mm/min (and more preferably a speed of translation equal to 1000 mm/min), the quality of the inter-phase can be increased. Moreover, one can obtain an inter-phase that has a smaller thickness. When an intermetallic layer 220 is formed between first 20 and second 30 layers, its thickness is reduced by using a speed of translation of the rotating tool 70 that is comprised between 500 mm/min and 1000 mm/min. Still more preferably, this translation speed is comprised between 200 and 400 mm/min, and is still more preferably equal to 300 mm/min. When the speed of translation of the rotating tool 70 over the friction portion 15 of the upper surface 20u of the first layer 20 is increased, the raise in temperature induced in the first layer 20 decreases.

Preferably, the speed of rotation of the rotating tool 70 is comprised between 1000 and 4000 revolutions per minute, more preferably between 2000 and 3000 revolutions per minute, and is still more preferably equal to 2500 revolutions per minute.

Preferably, the following sets of first and second materials of first 20 and second 30 layers are used :

- ULC steel (first layer 20) with Al2024 (second layer 30);
- ULC steel (first layer 20) with Al6061 (second layer 30);
- FeV (33 at%V) - Al.

First 20 and second 30 layers are preferably submitted to a surface treatment before carrying out the method of the invention. More preferably, at least one of these layers (20, 30) can be galvanized steel or anodized aluminium.

Some examples of the welding of two layers with the method of the invention are now presented. For these examples, the top layer 20 comprises ULC (Ultra-Low Carbon) steel, and the second layer 30 comprises aluminium of high purity (aluminium 1050: purity of 99.5%). The thickness $t_1$ of the first layer 20 is equal to 0.8mm whereas the thickness $t_2$ of the second layer 30 is equal to 0.6mm. The layup 50 comprising the first 20 and second 30 layers was firmly clamped on a backing plate. In this case, the second layer 30 did not melt along its whole thickness $t_2$. Hence, the restraining means comprise a solid lower surface 30b of the second layer 30 in this case. The rotating tool 70 was a cylinder comprising tungsten carbide and having an external diameter equal to 16mm. The speed of rotation of the rotating tool 70 was equal to 2000 revolutions per minute. The rotating tool 70 was translated over the upper surface 20u of the first steel layer 20 with an angle $\alpha$ equal to 0.5° with respect to an axis perpendicular to the upper surface 20u of the first layer 20 (see in figure 4 how the angle $\alpha$ is defined).

Figures 8 and 9 show images of microstructures of two layers that are welded according to the method of the invention. For these experiments, the temperature profiles induced along the thickness of the layup $(t_1 + t_2)$ during the welding process corresponds to curves 120 or 110. The images of figures 8 and 9 were obtained by a SEM (Scanning Electron Microscope) technique detecting backscattered electrons (BSE). Such a technique is known by the one skilled in the art. Heavy elements (high atomic number) backscatter electrons more strongly than light elements (low atomic number), and thus appear brighter in the images. The two layers that appear in figures 8 and 9 and that are welded have the characteristics detailed in previous paragraph. Figure 8 (respectively figure 9) corresponds to a case where the speed of translation of the rotating tool 70 over the upper surface 20u of the first layer 20 is equal to 200mm/min (respectively 400mm/min). The other experimental parameters have been detailed in the previous paragraph. A structure of solidification 210 in the second aluminium layer 30 can be observed in both figures 8 and 9, next to the interface with the first steel layer 20 (right part of the second aluminium layer 30). Hence, the aluminium has been melted in this region 210. In both cases (figures 8 and 9), an intermetallic layer 220 comprising Fe and Al is formed next to the boundary between the two layers (20,30). Such an intermetallic layer 220 indicates that aluminium of the second layer 30 has melted as a chemical reaction between aluminium and steel took place. When the speed of translation of the rotating tool 70 is equal to 200mm/min (case of figure 8), the intermetallic layer 220 has a thickness around $6\mu$m. When the speed of translation of the rotating tool 70 is equal to 400mm/min (case of figure 9), the intermetallic layer 220 has a thickness around $3\mu$m. This difference of thickness of the intermetallic layer 220 between cases of figures 8 and 9 is due to different values of the speed of translation of the rotating tool 70 over the upper surface 20u of the first layer 20. The raise in temperature under the rotating tool 70 and in the second layer 30 is higher when this rotating tool 70 is translated with a smaller speed of translation over the upper surface 20u of the first layer 20. Preferably, the thickness of the intermetallic layer 220 that is formed between the first 20 and second 30 layer with the method of the invention is comprised between 0.5 and 1.5μm. In the examples shown in figures 8 and 9, the intermetallic layer 220 is the inter-phase between first 20 and second 30 layers.

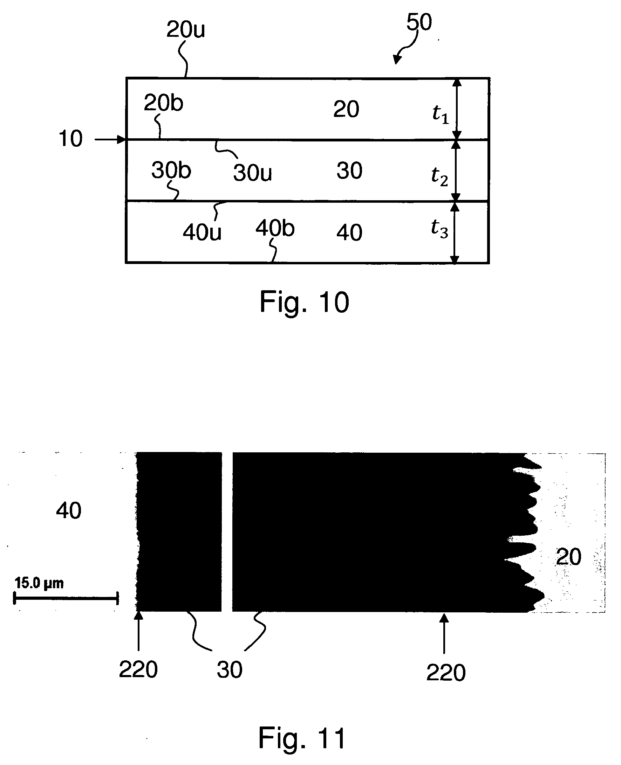

In another preferred embodiment, the method of the invention is used for welding three layers (see figure 10). In this case, a third layer 40 of a third material is provided. This third material has a third melting temperature, $T_{m,3}$, that is higher than the second melting temperature, $T_{m,2}$, of the second layer 30. As shown in figure 10, the layup 50 that is formed then comprises the three layers (20,30,40). The upper surface 40u of the third layer 40 contacts and at least covers the portion of the lower surface 30b of the second layer 30 that is in registry with the first joint surface 10. In figure 10, it is assumed that the first joint surface 10 comprises the whole lower surface 20b of the first layer 20 (or equivalently that the friction portion 15 comprises the whole upper surface 20u of the first layer 20). However, this is not necessary for the method of the invention as explained with figure 3. In the preferred embodiment of the method of the invention for welding three layers, the rotating tool 70 that is pressed and translated over at least a friction portion 15 of the upper surface 20u of the first layer 20 raises the temperature of the lower surface 30b of the second layer 30 to a value higher than the second melting temperature, $T_{m,2}$, of the second layer 30. Hence, the second layer 30 melts over its whole thickness $t_2$ in this case. Restraining means whose examples have been given above allow preventing molten second material from flowing out of the layup 50. When the method of the invention is used for welding three layers, the thickness $t_2$ of the second layer 30 is preferably comprised between 0.1 mm and 30mm, and more preferably, between 0.5mm and 20mm. When the method of the invention is used for welding three layers, the thermal conductivity of the first layer 20 is preferably higher than 1W/(m*K) at 20°C, more preferably higher than 10W/(m*K) at 20°C, and still more preferably higher than 100W/(m*K) at 20°C. When the method of the invention is used for welding three layers, the thermal conductivity of the second layer 30 is preferably higher than 1W/(m*K) at 20°C, more preferably higher than 10W/(m*K) at 20°C, and still more preferably higher than 100W/(m*K) at 20°C. Any material for the third layer 40 can be used. Preferably, the material of the third layer 40 is chosen among the following materials: ceramics, polymers, metals, semimetals or semiconductors.

Preferably, the third material of the third layer 40 of figure 10 is vanadium. More preferably, this third material is steel.

Figure 11 shows images of microstructures of three layers (20,30,40) when the method of the invention is used for welding such three layers. These images were obtained by a SEM technique using BSE. In this example, the first layer 20 comprises ULC steel, the second layer 30 comprises aluminium, and the third layer 40 comprises vanadium (purity of 99.8%). The left part of figure 11 shows parts of the third 40 and second 30 layers whereas the right part of figure 11 shows parts of the second 30 and of the first 20 layers. The thickness $t_1$ of the first layer 20 is equal to 0.8mm; the thickness $t_2$ of the second layer 30 is equal to 0.6mm, and the thickness $t_3$ of the third layer 40 is equal to 0.5mm. All three layers (20,30,40) are 200mm long and 60mm large. For welding such three layers (20,30,40), the rotating tool 70 was not translated over the whole upper surface 20u of the first layer 20. Hence, the restraining means in this case correspond to means (and more precisely to a clamping system for keeping the layup 50 on a backing plate) preventing the rotating tool 70 from reaching a fringe extending along the perimeter 20p of the upper surface 20u of the first layer 20.

From figure 11, it can be seen that the aluminium second layer 30 melted over its whole thickness $t_2$. It can also be observed that chemical affinity between materials of the different layers strongly affect the thickness of the intermetallic layers 220 between each layers (20,30,40). The thickness of the intermetallic layer 220 between third 40 and second 30 layers is around 1μm whereas the thickness of the intermetallic layer 220 between second 30 and first 20 layers is around 50μm.

The present invention has been described in terms of specific embodiments, which are illustrative of the invention and not to be construed as limiting. More generally, it will be appreciated by persons skilled in the art that the present invention is not limited by what has been particularly shown and/or described hereinabove. Reference numerals in the claims do not limit their protective scope. Use of the verbs "to comprise", "to include", "to be composed of", or any other variant, as well as their respective conjugations, does not exclude the presence of elements other than those stated. Use of the article "a", "an" or "the" preceding an element does not exclude the presence of a plurality of such elements.

Summarized, the invention may also be described as follows. The method of the invention relates to a method for welding a first 20 and a second 30 layers together. The second melting temperature of the second layer 30, $T_{m,2}$, is lower than the first melting temperature of the first layer 20, $T_{m,1}$. After having formed a layup 50 by placing the first layer 20 on top of the second layer 30, a rotating tool 70 is pressed and translated over at least a friction portion 15 of the upper surface 20u of the first layer 20 such that the temperature reached by at least a portion of the upper surface 30u of the second layer 30 is higher than the second melting temperature, $T_{m,2}$. Restraining means allow preventing molten second material from flowing out of the layup 50. Materials of first 20 and second 30 layers are chosen among the following materials: metals, semi-metals, or semiconductors. It is preferred that at least one of the first 20 and second 30 layers is a metal. It is most preferred that both layers (20, 30) are metals. In particular, the first 20 and second 30 layers may preferably consist of aluminium, steel, copper, vanadium.

**Claims**

1. Method for welding at least two layers together over at least a first joint surface (10), the materials of the layers being chosen among the following materials: metals, semi-metals or semiconductors; the method comprising the steps of:

   (a) providing a first layer (20) of a first material having a first melting temperature, $T_{m,1}$, said first layer (20) having an upper surface (20u) and a lower surface (20b) separated by the thickness $t_1$ of the first layer (20);
   (b) providing a second layer (30) of a second material having a second melting temperature, $T_{m,2}$, lower than the first melting temperature, $T_{m,1}$, said second layer (30) having an upper surface (30u) and a lower surface (30b) separated by the thickness $t_2$ of the second layer (30);
   (c) forming a layup (50) by stacking the first and second layers (20, 30) such that the lower surface (20b) of the first layer (20) contacts and at least partially overlaps the upper surface (30u) of the second layer (30) forming an interface (17);
   (d) pressing and translating over at least one friction portion (15) of the upper surface (20u) of the first layer (20), wherein the portion of the interface (17) which is in registry with the friction portion (15) defines the first joint surface (10), a rotating tool (70) to raise the temperature of said at least one friction portion (15) of the upper surface (20u) of the first layer (20) by friction and to conduct heat through the thickness $t_1$ of the first layer (20) to the second layer (30) such that the temperature reached by at least a portion of the upper surface (30u) of the second layer (30) that is comprised in said first joint surface (10) is higher than the second melting temperature $T_{m,2}$;
   (e) providing restraining means for preventing molten second material from flowing out of the layup (50).

2. Method according to claim 1 **characterized in that** said restraining means comprise a cavity (90) with side walls (95) into which said layup (50) is snugly placed.

3. Method according to claim 1 or 2 **characterized in that** said restraining means prevent the rotating tool (70) from reaching a fringe extending along at least a portion of the perimeter (20p) of the upper surface (20u) of the first layer (20).

4. Method according to any of previous claims **characterized in that** said restraining means comprise a solid lower surface (30b) of the second layer (30).

5. Method according to any of previous claims **characterized in that** an inter-phase is formed between first (20) and second (30) layers, such inter-phase having a chemical composition different from first (20) and second (30) layers and/or a different physical configuration from first (20) and second (30) layers.

6. Method according to any of previous claims **characterized in that** at least one of said first and second materials of first (20) and second (30) layers is a metal.

7. Method according to any of previous claims **characterized in that** said at least two layers are metal layers.

8. Method according to claim 6 or 7 **characterized in that** an intermetallic layer (220) is formed between first (20) and second (30) layers.

9. Method according to any of previous claims **characterized in that** said first material is steel and **in that** said second material is aluminium.

10. Method according to any of previous claims **characterized in that** the thickness $t_1$ of the first layer (20) and the thickness $t_2$ of the second layer (20) are comprised between 0.3 mm and 2 mm.

11. Method according to any of previous claims **characterized in that** the rotating tool (70) is translated over said at least one friction portion (15) of the upper surface (20u) of the first layer (20) with a speed that is comprised between 50 mm/min and 1000 mm/min, and preferably between 100 mm/min and 500 mm/min.

12. Method according to any of previous claims **characterized in that** said rotating tool (70) has a speed of rotation comprised between 1000 and 3000 revolutions per minute.

13. Method according to any of claims 1 to 3, or 5 to 12 **characterized in that**:

    - the method further comprises between steps (b) and (c) the step of providing a third layer (40) of a third material having a third melting temperature, $T_{m,3}$, higher than the second melting temperature, $T_{m,2}$, of the second layer (30), said third layer (40) having an upper surface (40u) and a lower surface (40b); wherein in step (c):
    - the layup (50) further comprises said third layer (40) such that the upper surface (40u) of the third layer (40) contacts and at least covers the portion of the lower surface (30b) of the second layer (30) which is in registry with the first joint surface (10); and wherein in step (d)
- the rotating tool (70) raises the temperature of the lower surface (30b) of the second layer (30) to a value higher than the second melting temperature $T_{m,2}$ thereof.

**14.** Method according to claim 13 **characterized in that** said third material is vanadium.

**15.** Method according to claim 13 **characterized in that** said third material is steel.

## Patentansprüche

**1.** Verfahren zum Verschweißen von mindestens zwei Schichten über mindestens eine erste Anschlussfläche (10), wobei die Materialien der Schichten aus den folgenden Materialien ausgewählt sind: Metalle, Halbmetalle oder Halbleiter:

wobei das Verfahren die Schritte umfasst:

(a) Bereitstellen einer ersten Schicht (20) eines ersten Materials mit einer ersten Schmelztemperatur $T_{m,1}$, wobei die genannte erste Schicht (20) eine obere Fläche (20u) und eine untere Fläche (20b) hat, die durch die Dicke $t_1$ der ersten Schicht (20) getrennt ist;
(b) Bereitstellen einer zweiten Schicht (30) eines zweiten Materials mit einer zweiten Schmelztemperatur $T_{m,2}$, die niedriger ist als die erste Schmelztemperatur $T_{m,1}$, wobei die genannte Schicht (30) eine obere Fläche (30u) und eine untere Fläche (30b) hat, die durch die Dicke $t_2$ der zweiten Schicht (30) getrennt ist;
(c) Bilden einer Laminierung (50) durch Stapeln der ersten und der zweiten Schicht (20, 30) derart, dass die untere Schicht (20b) der ersten Schicht (20) die obere Fläche (30u) der zweiten Schicht (30) kontaktiert und mindestens teilweise überlappt und dabei eine Schnittstelle (17) bildet;
(d) Drücken und Übersetzen über mindestens einen Reibungsabschnitt (15) der oberen Fläche (20u) der ersten Schicht (20), wobei der Abschnitt der Schnittstelle (17), der in einer Reihe mit dem Reibungsabschnitt (15) ist, die erste gemeinsame Schnittstelle (10), ein Rotationswerkzeug (70) zum Erhöhen der Temperatur des genannten mindestens einen Reibungsabschnitts (15) der oberen Fläche (20u) der ersten Schicht (20) durch Reibung und zum Führen der Hitze durch die Dicke $t_1$ der ersten Schicht (20) zu der zweiten Schicht (30) derart definiert, dass die Temperatur, die durch mindestens einen Abschnitt der oberen Fläche (30u) der zweiten Schicht (30), die in der genannten ersten Anschlussfläche (10) inbegriffen ist, höher ist als die zweite Schmelztemperatur $T_{m,2}$;
(e) Bereitstellen von Beschränkungsmitteln, um zu verhindern, dass geschmolzenes zweites Material aus der Laminierung (50) fließt.

**2.** Verfahren gemäß Anspruch 1, **dadurch gekennzeichnet, dass** die genannten Beschränkungsmittel eine Ausnehmung (90) mit Seitenwänden (95) umfassen, in die die genannte Laminierung (50) festsitzend platziert ist.

**3.** Verfahren gemäß Anspruch 1 oder 2, **dadurch gekennzeichnet, dass** das genannte Beschränkungsmittel das Rotationswerkzeug (70) am Erreichen eines Randes hindert, der sich entlang mindestens einem Abschnitt des Perimeters (20p) der oberen Fläche (20u) der ersten Schicht (20) erstreckt.

**4.** Verfahren gemäß einem der voranstehenden Ansprüche, **dadurch gekennzeichnet, dass** die genannten Beschränkungsmittel eine feste untere Fläche (30b) der zweiten Schicht (30) umfassen.

**5.** Verfahren gemäß einem der voranstehenden Ansprüche, **dadurch gekennzeichnet, dass** eine Zwischenphase zwischen der ersten (20) und der zweiten (30) Schicht gebildet ist, wobei eine solche Zwischenphase eine von der ersten (20) und der zweiten (30) Schicht unterschiedliche chemische Zusammensetzung und / oder eine von der ersten (20) und der zweiten (30) Schicht unterschiedliche physikalische Konfiguration hat.

**6.** Verfahren gemäß einem der voranstehenden Ansprüche, **dadurch gekennzeichnet, dass** mindestens eines des genannten ersten und des genannten zweiten Materials der ersten (20) und der zweiten (30) Schicht ein Metall ist.

**7.** Verfahren gemäß einem der voranstehenden Ansprüche, **dadurch gekennzeichnet, dass** mindestens zwei Schichten Metallschichten sind.

**8.** Verfahren gemäß Anspruch 6 oder 7, **dadurch gekennzeichnet, dass** zwischen der ersten (20) und der zweiten (30) Schicht eine intermetallische Schicht (220) gebildet ist.

**9.** Verfahren gemäß einem der voranstehenden Ansprüche, **dadurch gekennzeichnet, dass** das genannte erste Material Stahl ist und das genannte zweite Material Aluminium ist.

**10.** Verfahren gemäß einem der voranstehenden Ansprüche, **dadurch gekennzeichnet, dass** die Dicke $t_1$ der ersten Schichte (20) und die Dicke $t_2$ der zweiten Schicht (20) zwischen 0,3 mm und 2 mm inbegriffen sind.

**11.** Verfahren gemäß einem der voranstehenden Ansprüche, **dadurch gekennzeichnet, dass** das Rotationswerkzeug (70) über dem genannten mindestens einen Reibungsabschnitt (15) der oberen Fläche (20u) der ersten Schicht (20) mit einer Geschwindigkeit übersetzt ist, die zwischen 50 mm/Min. und 1000 mm/Min. und bevorzugt zwischen 100 mm/Min. und 500 mm/Min. inbegriffen ist.

**12.** Verfahren gemäß einem der voranstehenden Ansprüche, **dadurch gekennzeichnet, dass** das genannte Rotationswerkzeug (70) eine zwischen 1000 und 3000 Umdrehungen pro Minute inbegriffene Rotationsgeschwindigkeit hat.

**13.** Verfahren gemäß irgendeinem der Ansprüche 1 bis 3 oder 5 bis 12, **dadurch gekennzeichnet, dass**:

- das Verfahren weiterhin zwischen den Schritten (b) und (c) den Schritt der Bereitstellung einer dritten Schicht (40) eines dritten Materials mit einer dritten Schmelztemperatur $T_{m,3}$, die höher ist als die zweite Schmelztemperatur $T_{m,2}$ der zweiten Schicht (30) umfasst, wobei die dritte Schicht (40) eine obere Fläche (40u) und eine untere Fläche (40b) umfasst; wobei in Schritt (c);
- die Laminierung (50) weiterhin die genannte dritte Schicht (40) derart umfasst, dass die obere Fläche (40u) der dritten Schicht (40) den Abschnitt der unteren Fläche (30b) der zweiten Schicht (30), die in einer Reihe mit der ersten Anschlussfläche (10) ist, kontaktiert und mindestens abdeckt; und wobei in Schritt (d)
- das Rotationswerkzeug (70) die Temperatur der unteren Fläche (30b) der zweiten Fläche (30) auf einen Wert erhöht, der höher ist als die zweite Schmelztemperatur $T_{m,2}$ davon.

**14.** Verfahren gemäß Anspruch 13, **dadurch gekennzeichnet, dass** das genannte dritte Material Vanadium ist.

**15.** Verfahren gemäß Anspruch 13, **dadurch gekennzeichnet, dass** das genannte dritte Material Stahl ist.

## Revendications

**1.** Procédé pour souder au moins deux couches l'une à l'autre sur au moins une première surface de jonction (10), les matériaux des couches étant choisis parmi les matériaux suivants: métaux, semi-métaux ou semi-conducteurs;

le procédé comprenant les étapes suivantes:

(a) prévoir une première couche (20) d'un premier matériau présentant une première température de fusion, $T_{m,1}$, ladite première couche (20) présentant une surface supérieure (20u) et une surface inférieure (20b) séparées par l'épaisseur $t_1$ de la première couche (20);
(b) prévoir une deuxième couche (30) d'un deuxième matériau présentant une deuxième température de fusion, $T_{m,2}$, qui est inférieure à la première température de fusion, $T_{m,1}$, ladite deuxième couche (30) présentant une surface supérieure (30u) et une surface inférieure (30b) séparées par l'épaisseur $t_2$ de la deuxième couche (30);
(c) former un empilement (50) en empilant la première couches (20) et la deuxième couche (30) de telle sorte que la surface inférieure (20b) de la première couche (20) soit en contact avec et chevauche au moins partiellement la surface supérieure (30u) de la deuxième couche (30) en formant une interface (17);
(d) presser et déplacer sur au moins une partie de frottement (15) de la surface supérieure (20u) de la première couche (20), dans lequel la partie de l'interface (17) qui est alignée avec la partie de frottement (15) définit la première surface de jonction (10), un outil rotatif (70) dans le but de faire monter la température de ladite au moins une partie de frottement (15) de la surface supérieure (20u) de la première partie (20) par l'entremise du frottement et de conduire la chaleur à travers l'épaisseur $t_1$ de la première couche (20) jusqu'à la deuxième couche (30), de telle sorte que la température atteinte par au moins une partie de la surface supérieure (30u) de la deuxième couche (30) qui est comprise dans ladite première surface de jonction (10) soit supérieure à la deuxième température de fusion $T_{m,2}$;
(e) prévoir des moyens de limitation pour empêcher le deuxième matériau fondu de s'écouler hors de l'empilement (50).

**2.** Procédé selon la revendication 1, **caractérisé en ce que** lesdits moyens de limitation comprennent une cavité (90) présentant des parois latérales (95), dans laquelle ledit empilement (50) est placé de façon serrée.

**3.** Procédé selon la revendication 1 ou 2, **caractérisé en ce que** lesdits moyens de limitation empêchent l'outil rotatif (70) d'atteindre une frange qui s'étend le long d'au moins une partie du périmètre (20p) de la surface supérieure (20u) de la première couche (20).

**4.** Procédé selon l'une quelconque des revendications précédentes, **caractérisé en ce que** lesdits moyens de limitation comprennent une surface inférieure pleine (30b) de la deuxième couche (30).

**5.** Procédé selon l'une quelconque des revendications précédentes, **caractérisé en ce qu'**une phase intermédiaire est formée entre la première couche (20) et la deuxième (30) couche, ladite phase intermédiaire présentant une composition chimique différente de celle de la première (20) et de la deuxième (30) couche, et/ou une configuration physique différente de celle de la première (20) et de la deuxième (30) couche.

**6.** Procédé selon l'une quelconque des revendications précédentes, **caractérisé en ce qu'**au moins un desdits premier et deuxième matériaux des première (20) et deuxième (30) couches est un métal.

**7.** Procédé selon l'une quelconque des revendications précédentes, **caractérisé en ce que** lesdites au moins deux couches sont des couches de métal.

**8.** Procédé selon la revendication 6 ou 7, **caractérisé en ce qu'**une couche intermétallique (220) est formée entre la première couche (20) et la deuxième (30) couche.

**9.** Procédé selon l'une quelconque des revendications précédentes, **caractérisé en ce que** ledit premier matériau est l'acier, et **en ce que** ledit deuxième matériau est l'aluminium.

**10.** Procédé selon l'une quelconque des revendications précédentes, **caractérisé en ce que** l'épaisseur $t_1$ de la première couche (20) et l'épaisseur $t_2$ de la deuxième couche (20) sont comprises entre 0,3 mm et 2 mm.

**11.** Procédé selon l'une quelconque des revendications précédentes, **caractérisé en ce que** l'outil rotatif (70) est déplacé sur ladite au moins une partie de frottement (15) de la surface supérieure (20u) de la première couche (20) à une vitesse qui est comprise entre 50 mm/minute et 1000 mm/minute, et de préférence entre 100 mm/minute et 500 mm/minute.

**12.** Procédé selon l'une quelconque des revendications précédentes, **caractérisé en ce que** ledit outil rotatif (70) présente une vitesse de rotation qui est comprise entre 1000 et 3000 tours par minute.

**13.** Procédé selon l'une quelconque des revendications 1 à 3, ou 5 à 12, **caractérisé en ce que**:

- le procédé comprend en outre, entre les étapes (b) et (c), l'étape qui consiste à prévoir une troisième couche (40) d'un troisième matériau présentant une troisième température de fusion, $T_{m,3}$, qui est supérieure à la deuxième température de fusion, $T_{m,2}$, de la deuxième couche (30), ladite troisième couche (40) présentant une surface supérieure (40u) et une surface inférieure (40b); dans lequel, à l'étape (c):
- l'empilement (50) comprend en outre ladite troisième couche (40) de telle sorte que la surface supérieure (40u) de la troisième couche (40) entre en contact avec et couvre au moins la partie de la surface inférieure (30b) de la deuxième couche (30) qui est alignée avec la première surface de jonction (10), et dans lequel, à l'étape (d)
- l'outil rotatif (70) fait monter la température de la surface inférieure (30b) de la deuxième couche (30) jusqu'à une valeur supérieure à la deuxième température de fusion $T_{m,2}$ de celle-ci.

**14.** Procédé selon la revendication 13, **caractérisé en ce que** ledit troisième matériau est le vanadium.

**15.** Procédé selon la revendication 13, **caractérisé en ce que** ledit troisième matériau est l'acier.

Fig. 1                    Fig. 2

Fig. 3

20u

20    $t_1$

10 →

30b    30    $t_2$

α

70

z

Fig. 4

90

95    50    95

Fig. 5

20p    20u

200

Fig. 6

Fig. 7

Fig. 8

Fig. 9

Fig. 10

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010067796 A1

- US 3899116 A

**Non-patent literature cited in the description**

- **R.S. MISHRA et al.** *Mater. Sci. Eng. R,* 2005, vol. 50, 1-78
- **ZHANG GUIFENG.** *Metall. Mater. Trans.,* vol. 42 (9), 2850-2861

- **ZHANG GUIFENG et al.** *Metall. Mater. Trans.,* vol. 42 (9), 2850-2861